Europäisches Patentamt

European Patent Office

Office européen des brevets

(11) Publication number: **0 503 163 A1**

# EUROPEAN PATENT APPLICATION

(21) Application number: **91200517.0**

(22) Date of filing: **11.03.91**

(51) Int. Cl.5: **C09K 11/86**, G21K 4/00

(43) Date of publication of application:
**16.09.92 Bulletin 92/38**

(84) Designated Contracting States:
**BE**

(71) Applicant: **AGFA-GEVAERT naamloze vennootschap**
**Septestraat 27**
**B-2640 Mortsel(BE)**

(72) Inventor: **Tecotzky, Melvin**
**27 North Linden Lane**
**Mendham NJ 07945(US)**
Inventor: **Leblans, Paul**
**Deken De Winterstraat 51**
**B-2600 Berchem(BE)**
Inventor: **Schipper, Willem**
**J.v.d. Borchstraat 39**
**NL-3515 XB Utrecht(NL)**
Inventor: **Vroon, Zeeger**
**Hondsroos 5**
**NL-3831 CG Heusden(NL)**
Inventor: **Blasse, George**
**Tinbergenweg 76**
**NL-3731 LH De Bilt(NL)**

(54) Reproduction of X-ray images with photostimulable phosphor.

(57) A method for recording and reproducing an X-ray image is provided which method comprises the steps of :
(1) causing a photostimulable phosphor to absorb image-wise or pattern-wise modulated X-rays,
(2) photostimulating said phosphor with stimulating electromagnetic radiation selected from visible light and infrared light to release from the phosphor in accordance with the absorbed X-rays electromagnetic radiation different in wavelength characteristic from the radiation used in the photo-stimulation, and
(3) detecting said electromagnetic radiation emitted by photostimulation,
wherein said phosphor is an oxyhalide corresponding to the empirical formula $M_{4-n}OX_6:D_n$ as defined herein.

EP 0 503 163 A1

This invention relates to the use of a photostimulable oxyhalide phosphor in a method of recording and reproducing an X-ray pattern by means of a binder layer containing said phosphor in a screen or panel.

It is well known that X-rays can cause appropriate substances to luminesce. Substances showing the phenomenon of luminescence under the influence of X-rays are called phosphors.

According to a classical method of recording and reproducing an X-ray pattern phosphors are used to form radiographs in conjunction with photographic silver halide emulsion materials being highly sensitive to the emitted fluorescent light.

The phosphors used in said screens should be luminescent but not exhibit appreciable long lived emission after the X-ray source is switched off. If a screen with marked-long lived emission were to be used, it would retain its image after the X-ray beam had ceased and fresh film contacted with it would gain a so-called ghost impression that would interfere with the next image to be made. This phenomenon being undesirable in the production of radiographs by contact exposure with a fluorescent X-ray conversion screen is known under the terms "after-glow" and "lag".

According to another method of recording and reproducing an X-ray pattern disclosed e.g. in US-P 3,859,527 a special type of phosphor is used, known as a photostimulable phosphor, which being incorporated in a panel is exposed to incident pattern-wise modulated X-rays and as a result thereof temporarily stores therein energy contained in the X-ray radiation pattern. At some interval after the exposure, a beam of visible or infra-red light scans the panel to stimulate the release of stored energy as light that is detected and converted to sequential electrical signals which are processable to produce a visible image. For this purpose, the phosphor should store as much as possible of the incident X-ray energy and emit as little as possible of energy until stimulated by the scanning beam.

As described in US-P 4,239,968 europium-doped barium fluorohalides are particularly useful for application as stimulable phosphors for their high sensitivity to stimulating light of a He-Ne laser beam (633 nm), ruby laser beam (694 nm) and YAG laser beam (1064 nm), the optimum of stimulation being in the range of 500 to 700 nm. The light emitted on stimulation, called stimulated light is situated in the wavelength range of 350 to 450 nm with its main peak at 390 nm (ref. the periodical Radiology, September 1983, p. 834).

As described in said periodical the imaging plate containing the stimulable phosphor can be used repeatedly to store X-ray images simply by flooding it with light to erase the residual energy it contains.

Classical X-ray phosphors by virtue of the fact that they reemit promptly most of the absorbed energy and store very little are unsuitable as storage phosphors. So, there is still an intensive research going on to find phosphors that fulfil the requirements related to efficient X-ray energy storage and photo-stimulability.

Alkaline earth metal oxyhalide compounds have been reported by Frit et al. in Acta Cryst. B26 (1970), p.16 and in Bull. Soc. Chim. 7 (1966), 2190. In none of these publications these oxyhalides have been reported as exhibiting efficient X-ray energy storage and stimulability with visible or infrared light.

It is an object of the present invention to provide a process for recording and reproducing X-ray patterns wherein particular europium doped oxyhalide phosphors are used for storing energy from incident X-rays and releasing said energy by photostimulation in the form of electronically detectable photons of shorter wavelength than the light used in the photostimulation.

It is a further object of the present invention to provide an X-ray screen or panel containing said photostimulable phosphor dispersed in a binder layer.

Other objects and advantages of the present invention will become clear from the following description.

In accordance with the present invention a method for recording and reproducing an X-ray image is provided which comprises the steps of :

(1) causing a photostimulable phosphor to absorb image-wise or pattern-wise modulated X-rays,

(2) photostimulating said phosphor with stimulating electromagnetic radiation selected from visible light and infrared light to release from the phosphor in accordance with the absorbed X-rays electromagnetic radiation different in wavelength from the radiation used in the photo-stimulation, and

(3) detecting said electromagnetic radiation emitted by photostimulation, characterized in that said phosphor is an oxyhalide corresponding to the following empirical formula (I) :

$$M_{4-n}OX_6 : D_n \qquad (I)$$

wherein :

M is at least one of the alkaline earth metals selected from the group consisting of Ca, Sr and Ba,

X is at least one of the halogens selected from the group consisting of Cl and Br when M is Sr or Ba and is Cl when M is Ca,

D is a dopant being at least one rare earth metal selected from the group consisting of $Eu^{2+}$ and $Ce^{3+}$,

EP 0 503 163 A1

optionally in combination with at least one co-dopant being a member selected from the group consisting of La, Y, Sc, the lanthanide elements except $Eu^{2+}$ and $Ce^{3+}$ and one or more alkali elements selected from the group consisting of Na, K, Rb and Cs, and

n is in the range $5x10^{-5} < n < 4x10^{-1}$, and wherein said co-dopant(s) when present is (are) used in an amount not higher than defined by the maximum value of n.

In preferred photostimulable phosphors according to the above empirical formula (I) M is at least one element of the group consisting of Sr and Ba; X is at least one element of the group consisting of Cl and Br; D represents a member selected from the group consisting of $Eu^{2+}$ and $Ce^{3+}$ optionally in combination with at least one co-dopant selected from the group of La, Y, Sc and lanthanide elements other than $Eu^{2+}$ and $Ce^{3+}$ or one or more alkali elements selected from the group consisting of Na and K, and n is in the range $10^{-4} \leq n \leq 5x10^{-2}$, and wherein said co-dopant(s) when present is (are) used in an amount not higher than defined by said maximum value of n.

The photostimulable phosphors suited for use according to the present invention can be prepared by firing mixtures of Ca, Sr and/or Ba halides and oxygen-containing salts of Ca, Sr and/or Ba such as carbonates, nitrates and sulfates, and the halides or oxygen-containing salts of the D element(s), for periods of up to 40 hours at temperatures between 500 and 800 °C. Optionally one or more of the D elements can be incorporated while being coprecipitated with Ca, Sr and/or Ba halides and/or oxygen-containing salts and/or oxides of said alkaline earth metals.

For use in the method according to the present invention the photostimulable oxyhalide phosphor is preferably present in dispersed form in a binder layer that may be supported or self-supporting and forms a screen or panel, called X-ray image storage panel.

The binder layer incorporates said phosphor in dispersed form preferably in (a) film forming organic polymer(s), e.g. a cellulose acetate butyrate, polyalkyl (meth)acrylates, e.g. polymethyl methacrylate, a polyvinyl-n-butyral e.g. as described in the United States Patent Specification 3,043,710, a copoly(vinyl acetate/vinyl chloride) and a copoly(acrylonitrile/butadiene/styrene) or a copoly(vinyl chloride/vinyl acetate/vinyl alcohol) or mixture thereof.

It is preferable that a minimum amount of binder be employed to obtain a high X-ray energy absorption. However, a very small amount of binding agent may result in a too brittle layer, so a compromise has to be made. The coverage of the phosphor is preferably in the range from about 300 to 1500 g/m2.

The oxyhalide phosphor used according to the present invention is preferably protected against the influence of moisture by adhering thereto chemically or physically a hydrophobic or hydrophobizing substance. Suitable substances for said purpose are described e.g. in US-P 4,138,361.

According to a preferred embodiment the phosphor layer is used as a supported layer on a support sheet. Suitable support materials are made of a film forming organic resin, e.g. polyethylene terephthalate, but paper supports and cardboard supports optionally coated with a resin layer such as an alpha-olefinic resin layer are also particularly useful. Further are mentioned glass supports and metal supports. The thickness of the phosphor layer is preferably in the range of 0.05 mm to 0.5 mm.

For the preparation of the photostimulable phosphor screen the phosphor particles are intimately dispersed in a solution of the binder and then coated on the support and dried. The coating of the present phosphor binder layer may proceed according to any usual technique, e.g. by spraying, dip-coating or doctor blade coating. After coating, the solvent(s) of the coating mixture is (are) removed by evaporation, e.g. by drying in a hot (60 °C) air current.

An ultrasonic treatment can be applied to improve the packing density and to perform the de-aeration of the phosphor-binder combination. Before the optional application of a protective coating the phosphor-binder layer may be calendered to improve the packing density (i.e. the number of grams of phosphor per $cm^3$ of dry coating).

Optionally, a light-reflecting layer is provided between the phosphor-containing layer and its support to enhance the output of light emitted by photostimulation. Such a light-reflecting layer may contain white pigment particles dispersed in a binder, e.g. titanium dioxide particles, or it may be made of a vapour-deposited metal layer, e.g. an aluminium layer, or it may be a coloured pigment layer absorbing stimulating radiation but reflecting the emitted light as described e.g. in US-P 4,380,702.

In order to improve resolution it is possible to provide underneath the phosphor layer a layer absorbing the emitted light e.g. a layer containing carbon black or to use a coloured support e.g. a grey or black film support.

According to an embodiment of the above defined method for recording and reproducing an X-ray image the photostimulation of the phosphor-binder layer that has been exposed image-wise or pattern-wise to X-rays proceeds with a scanning light beam, preferably a laser light beam, e.g. of He-Ne laser emitting at 633 nm, argon ion laser emitting at 514.5 nm or frequency doubled Nd:YAG laser beam of 532 nm wavelength.

The light emitted by photostimulation is detected preferably with a transducer transforming light energy into electrical energy, e.g. a phototube (photomultiplier) providing sequential electrical signals that can be digitized and stored. After storage these signals can be subjected to digital processing. Digital processing includes e.g. image contrast enhancement, spatial frequency enhancement, image subtraction, image addition and contour definition of particular image parts.

According to one embodiment for the reproduction of the recorded X-ray image the optionally processed digital signals are transformed into analog signals that are used to modulate a writing laser beam, e.g. by means of an acousto-optical modulator. The modulated laser beam is then used to scan a photographic material, e.g. a silver halide emulsion film whereon the X-ray image optionally is reproduced in image-processed state. For said embodiment and apparatus used therein reference is made e.g. to the periodical Radiology, September 1983, p. 833-838.

According to another embodiment the digital signals obtained from the analog-digital conversion of the electrical signals corresponding with the light obtained through photostimulation are displayed on a cathode-ray tube. Before display the signals may be processed by computer. Conventional image processing techniques can be applied to reduce the signal-to-noise ratio of the image and enhance the image quality of coarse or fine image features of the radiograph.

On the phosphors of the present invention measurements have been carried out for determining their photo-physical properties.

First the emission spectrum of the phosphor under X-ray excitation is measured. The measurement proceeds with a spectrofluorimeter in which excitation by X-ray irradiation is carried out with an X-ray source operating at 110 kVp. During continuous X-ray excitation the emitted light is scanned by a monochromator coupled to a photomultiplier. This emission spectrum is identical to that obtained upon photostimulation and is used to determine which filters are to be used in all the other measurements. A first filter transmits the emitted light obtained by photostimulation but filters out almost all of the stimulating light. For Nd:YAG laser stimulation a 5 mm HOYA B 390 filter is used, whose transmission spectra are described in the HOYA Color Filter Glass Catalogue No. 8503E published by the HOYA Corporation, Tokyo, Japan.

In the second measurement the total photostimulable energy stored upon exposure to a given X-ray dose is determined. Prior to X-ray excitation any residual energy still present in the phosphor screen is removed by irradiation with frequency doubled Nd:YAG laser light. The phosphor screen is then excited with an X-ray source operating at 85 kVp and 20 mA. For that purpose the MONODOR X-ray source of Siemens AG - W. Germany was used. The low energy X-rays are filtered out with a 21 mm thick aluminium plate to harden the X-ray spectrum. After X-ray excitation the phosphor screen is transferred in the dark to the measurement setup. In this setup laser light is used to photostimulate the X-ray irradiated phosphor screen. The laser used in this measurement is the frequency doubled Nd:YAG laser (532 nm).

The laser-optics comprise an electronic shutter, a beam-expander and two filters. A photomultiplier (Hamamatsu R 1398) collects the light emitted by the photostimulation and gives a corresponding electrical current. The measurement procedure is controlled by a Hewlett Packard HP 9826 computer connected to a HP 6944 multiprogrammer. After amplification with a current to voltage converter a TEKTRONIX 7D20 digital oscilloscope visualizes the photocurrent obtained. When the electronic shutter is opened the laser beam begins to stimulate the phosphor screen and the digital oscilloscope is triggered. Using a pinhole placed in contact with the screen the light emitted by only 7 mm $^2$ is collected. Only half of the laser power (55 mW) reaches the screen surface. In this way the intensity of the stimulating beam is more uniform. A red filter (3 mm SCHOTT OG 590) placed immediately in front of the laser eliminates the weak ultraviolet components in the laser emission. The signal amplitude from the photomultiplier is linear with the intensity of the photostimulating light and with the stored photostimulable energy. The signal decreases exponentially. When the signal curve is entered the oscilloscope is triggered a second time to measure the offset which is defined as the component of error that is constant and independent of inputs. After subtracting this offset the point at which the signal reaches l/e of the maximum value is calculated. The integral below the curve is then calculated from the start to this l/e point. The function is described mathematically by $f(t) = A.e^{-t/\tau}$ :

wherein A is the amplitude, $\tau$ is the time constant, t is stimulation time, and e is the base number of natural logarithms.

The l/e point is reached when $t = \tau$ at which 63 % of the stored energy has been released. To obtain said result, the computer multiplies the integral with the sensitivity of the system. The sensitivity of the photomultiplier and amplifier have therefore to be measured as a function of anode-cathode voltage of the photomultiplier and the convolution of the emission spectrum of the phosphor and the transmission spectrum of the separating filter has to be calculated. Because the emission light is scattered in all directions only a fraction of the emitted light is detected by the photomultiplier. The position of the panel and photomultiplier are such that 10 % of the total emission is detected by the photomultiplier. After all these corrections have been made a conversion efficiency value (C.E.) is obtained in $pJ/mm^3/mR$. This value varies with screen thickness and therefore for measurements to be comparable they have to be carried out at constant phosphor coverage.

The stimulation energy is defined as the energy necessary to stimulate 63 % of the stored energy and is expressed in $\mu J/mm^2$.

In a third measurement the response time is determined. This is measured by stimulating the phosphor screen with short light pulses. The laser light is modulated with an acousto-optical modulator. The rise time of the stimulating light is 15 ns. The emitted light is measured with a photomultiplier (Hamamatsu R 1398) with a small anode resistor (150 ohm) to obtain a wide bandwidth (10 MHz). The rise time of the measurement system itself is 35 ns. The response time is the time to reach half of the maximum intensity of the emitted light and is designated tl/2.

In a fourth measurement the stimulation spectrum is determined. The light of a tungsten (quartz-iodine) lamp is fed into a monochromator (Bausch and Lomb - W. Germany) and then mechanically chopped with a rotating wheel with a single hole. The lamp provides a continuous spectrum extending from the near UV through the visible spectrum into the infrared. The 33-86-02 grating from Bausch and Lomb is a 1350 line/mm grating covering the visible range from 350 nm to 800 nm in the first order and is blazed at 500 nm. The wavelength of the stimulating light can be set via a step motor connected to the monochromator under the control of a computer. The second harmonic of the monochromator is eliminated by placing a 4 mm Schott GG435 filter in front of the phosphor screen. By chopping the stimulating light (duty cycle 1/200) only a small fraction of the absorbed energy in the phosphor is released. Only the AC signal is measured to eliminate the offset caused due to e.g. the dark current of the photomultiplier. A good signal to noise ratio is obtained by averaging several pulses. Upon completing the measurement the computer corrects the curve for the intensity wavelength dependence of the tungsten lamp. The measurement can be repeated so that the evolution of the stimulation spectrum can be followed over a period of up to 15 hours.

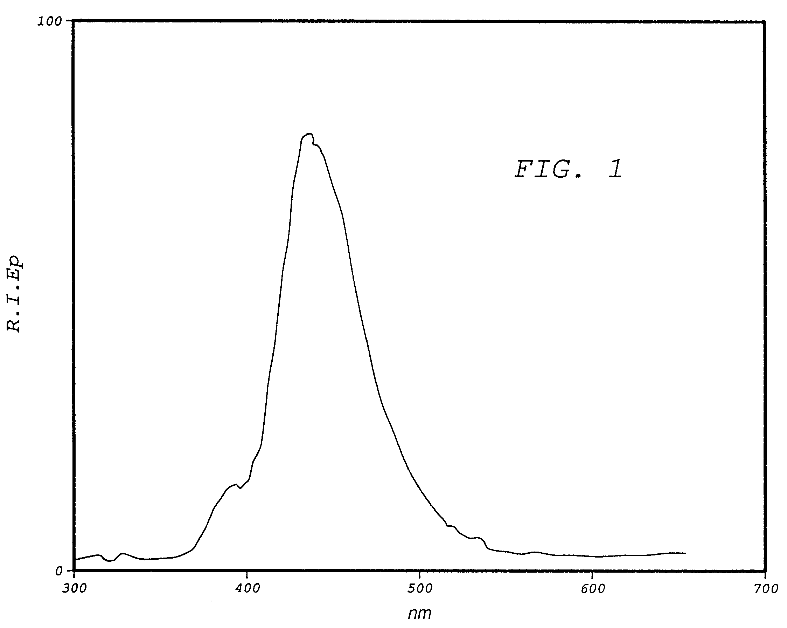

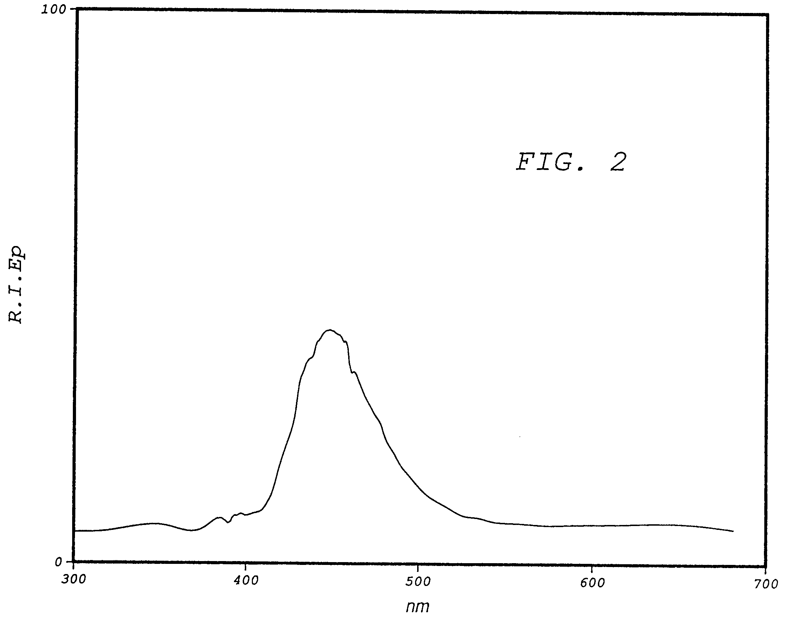

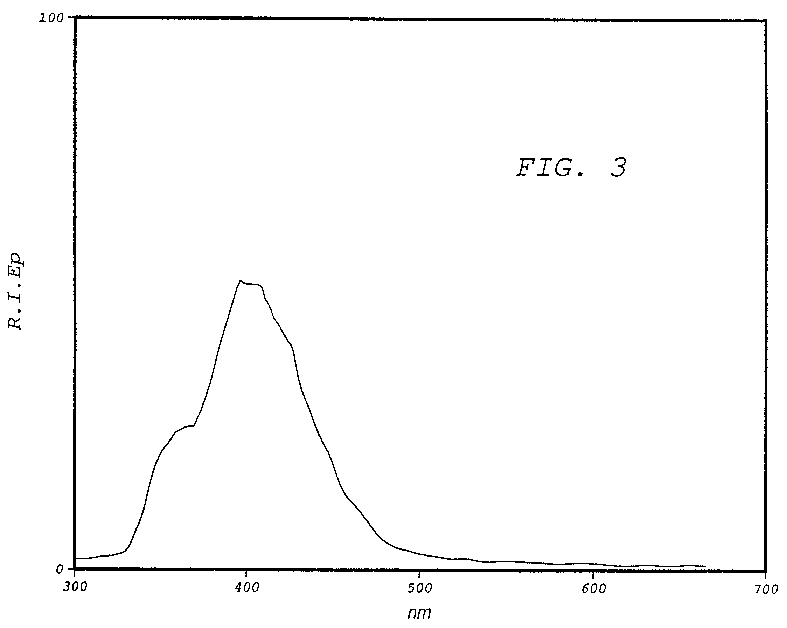

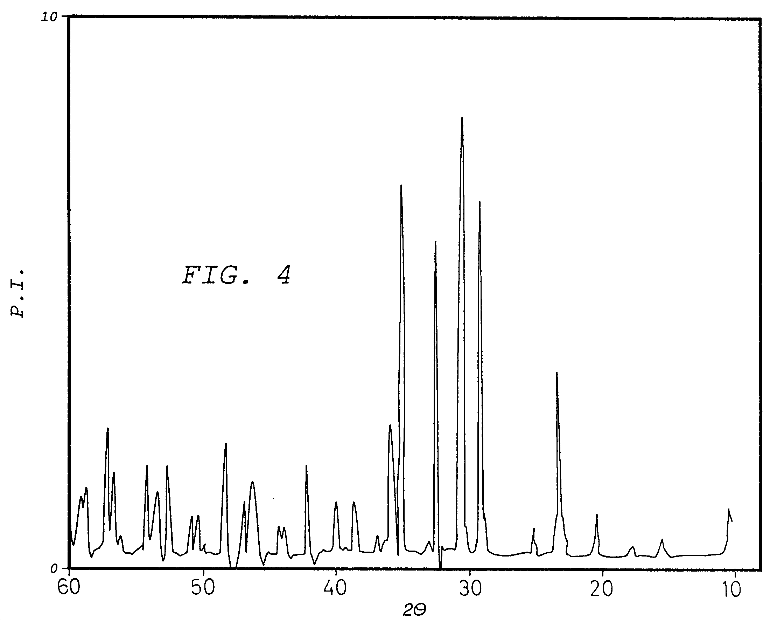

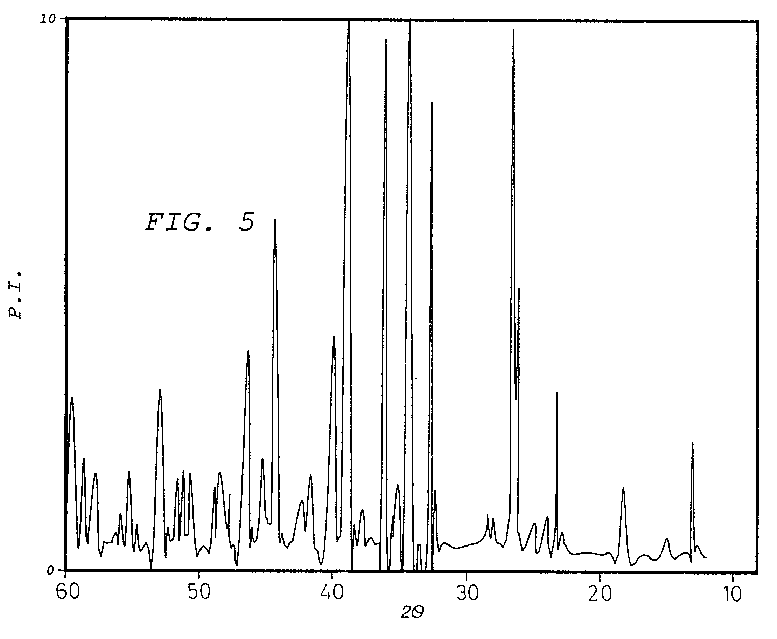

The present invention is illustrated by the following examples wherein reference is made to curves represented in Fig. 1 to 6. The examples are not limiting in any way. In the examples the ratios indicate the number of the moles of every component present per formula unit.

Figures 1, 2 and 3 represent "prompt" emission spectra of the phosphors described in the correlated Examples 1, 2 and 3. In the diagrams the relative intensity of the prompt emission (R.I.E. $_p$) is in the ordinate and the exciting wavelength in nm is in the abscissa.

Fig. 4 relates to the X-ray diffraction spectrum (XRD spectrum with $Cuk_\alpha$ ) of the oxyhalide phosphor obtained by the procedure of Example 1. In said Fig. 4 peak intensity (P.I.) is plotted against 2xTheta ($2\theta$), being the angle in degrees at which the peaks are observed.

Fig. 5 relates to the X-ray diffraction spectrum (XRD spectrum with $CuK_\alpha$) of the oxyhalide phosphor obtained of Example 3. In said Fig. 5 peak intensity (P.I.) is plotted against 2xTheta ($2\theta$), being the angle in degrees at which the peaks are observed.

Fig. 6 shows the stimulation spectrum of the oxyhalide phosphor obtained by the procedure of Example 1. The relative intensity (R.I.) of the emitted light is plotted versus the wavelength in nm of the stimulating light.

EXAMPLE 1

- Preparation of $Ba_{3.9977}Eu_{0.0023}OBr_6$

The following ingredients were weighed out :

| | |
|---|---|
| $BaBr_2.2\,H_2O$ | 3.3319 g |
| $Ba(NO_3)_2$ | 0.8712 g |
| $EuBr_3$ | 0.003 g |

Mixing and Firing

Said ingredients were mixed in a ball mill for 10 min. The obtained grain mixture was placed in an alumina crucible in an oven and heated to 750 ° C in 2 hours. The oven was kept at that temperature for 3 hours and was then allowed to cool down. During the firing procedure hydrogen was flowed through the oven at a rate of 2 ml/min. The obtained sample was ground in a mortar.

The obtained phosphor powder sample was then dispersed in a binder solution containing polyethylacrylate dissolved in ethyl acetate. The dispersion obtained was coated onto a 100 $\mu$m thick transparent sheet of polyethylene terephthalate to give a coating weight of 500 g/m2. This screen was then used to determine the energy storage characteristics of the phosphor. After erasing any residual stored energy by exposure to a frequency doubled Nd:YAG laser light (532 nm), the screen was irradiated with a given dose of X-rays and then stimulated with Nd:YAG laser light (532 nm) as described hereinbefore.

The conversion efficiency (C.E.) determined as described hereinbefore and expressed in pJ/mm$^3$/mR was 1.8.

The stimulation energy was 93 $\mu$J/mm$^2$.

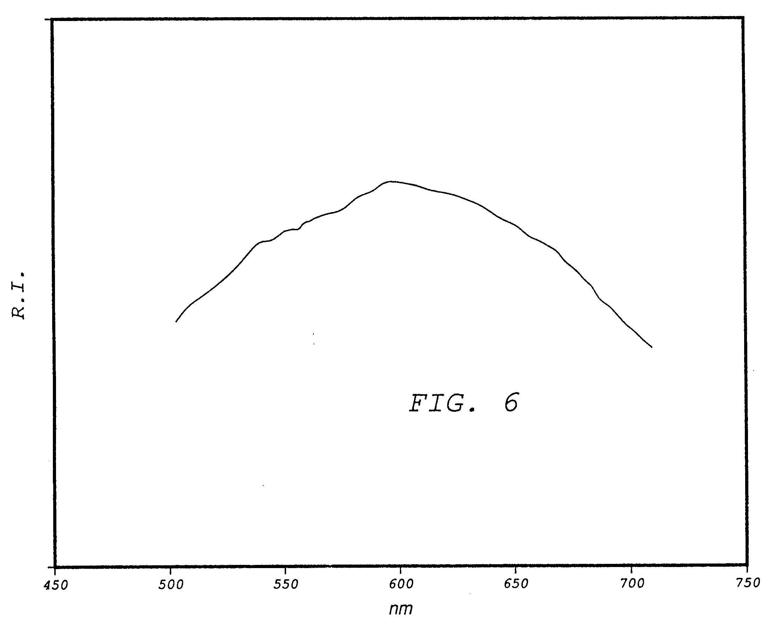

The stimulation spectrum of the obtained phosphor was measured according to the described procedure and is plotted in Fig. 6.

The reponse time of the phosphor was measured to be about 500 ns.

EXAMPLE 2

- Preparation of $Ba_{3.9977}Eu_{0.0023}OCl_6$

The following ingredients were weighed out :

| | |
|---|---|
| $BaCl_2$ | 2.0825 g |
| $Ba(NO_3)_2$ | 0.8712 g |
| $EuCl_3$ | 0.002 g |

Mixing and Firing

The mixing and firing procedures were identical to those described in Example 1.

The conversion efficiency (C.E.) determined as described hereinbefore and expressed in pJ/mm$^3$/mR was 0.04.

The stimulation energy was 76 $\mu$J/mm$^2$.

EXAMPLE 3

- Preparation of $Sr_{3.9977}Eu_{0.0023}OBr_6$

The following ingredients were weighed out :

| | |
|---|---|
| $SrBr_2$ | 2.4744 g |
| $Sr(NO_3)_2$ | 0.7054 g |
| $EuCl_3$ | 0.002 g |

Mixing and Firing

The mixing and firing procedures were identical to those described in Example 1.

The conversion efficiency (C.E.) determined as described hereinbefore and expressed in pJ/mm$^3$/mR was 0.24.

The stimulation energy was 14 $\mu$J/mm$^2$.

**Claims**

1. A method for recording and reproducing an X-ray image which method comprises the steps of :
   (1) causing a photostimulable phosphor to absorb image-wise or pattern-wise modulated X-rays,
   (2) photostimulating said phosphor with stimulating electromagnetic radiation selected from visible light and infrared light to release from the phosphor in accordance with the absorbed X-rays electromagnetic radiation different in wavelength characteristic from the radiation used in the photo-stimulation, and

(3) detecting said electromagnetic radiation emitted by photostimulation, characterized in that said phosphor is an oxyhalide corresponding to the following empirical formula (I):

$$M_{4-n}OX_6:D_n \qquad (I)$$

wherein :

M is at least one of the alkaline earth metals selected from the group consisting of Ca, Sr and Ba,

X is at least one of the halogen selected from the group consisting of Cl and Br when M is Sr or Ba and is Cl when M is Ca,

D is a dopant being at least one rare earth metal selected from the group consisting of $Eu^{2+}$ and $Ce^{3+}$, optionally in combination with at least one co-dopant being a member selected from the group consisting of La, Y, Sc, the lanthanide elements except $Eu^{2+}$ and $Ce^{3+}$, and one or more alkali elements selected from the group consisting of Na, K, Rb and Cs, and

n is in the range $5x10^{-5} < n < 4x10^{-1}$, and wherein said co-dopant(s) when present is (are) used in an amount not higher than defined by the maximum value of n.

2.  A method according to claim 1, wherein in said empirical formula (I) M is at least one element of the group consisting of Sr and Ba; X is at least one element of the group consisting of Cl and Br; D represents a member selected from the group consisting of $Eu^{2+}$ and $Ce^{3+}$ optionally in combination with at least one co-dopant selected from the group of La, Y, Sc and lanthanide elements other than $Eu^{2+}$ and $Ce^{3+}$ or one or more alkali elements selected from the group consisting of Na and K, and n is in the range $10^{-4} \leq n \leq 5x10^{-2}$, and wherein said co-dopant(s) when being present is (are) used in an amount not higher than defined by said maximum value of n.

3.  A method according to any of the preceding claims, wherein the photostimulation proceeds with a He-Ne laser, argon ion laser or frequency doubled Nd:YAG laser.

4.  A method according to any of the preceding claims, wherein the detection of the light emitted by photostimulation proceeds with a phototube providing electrical signals that are digitized and stored.

5.  A method according to claim 4, wherein after storage said signals are subjected to digital processing.

6.  A method according to claim 4, wherein digital signals obtained from analog-digital conversion of the electrical signals corresponding with the light obtained through photostimulation are displayed on a cathode-ray tube.

7.  A method according to claim 4, wherein the digital signals are transformed into analog signals that are used to modulate a writing laser beam.

8.  A method according to claim 7, wherein the modulated laser beam is used to scan a photographic material.

9.  A radiation image storage panel comprising a photostimulable phosphor in dispersed form in (an) organic film forming polymer(s), wherein said phosphor is an oxyhalide corresponding to the following empirical formula :

$$M_{4-n}OX_6:D_n$$

wherein :

M is at least one of the alkaline earth metals selected from the group consisting of Ca, Sr and Ba,

X is at least one of the halogens selected from the group consisting of Cl and Br when M is Sr or Ba and is Cl when M is Ca,

D is a dopant being at least one rare earth metal selected from the group consisting of $Eu^{2+}$ and $Ce^{3+}$, optionally in combination with at least one co-dopant being a member selected from the group consisting of La, Y, Sc, the lanthanide elements except $Eu^{2+}$ and $Ce^{3+}$, and one or more alkali elements selected from the group consisting of Na, K, Rb and Cs, and

n is in the range $5\times10^{-5} < n < 4\times10^{-1}$, and wherein said co-dopant(s) when present is (are) used in an amount not higher than defined by the maximum value of n.

10. A radiation image storage panel according to claim 9, wherein in said empirical formula (I) M is at least one element of the group consisting of Sr and Ba; X is at least one element of the group consisting of Cl and Br; D represents a member selected from the group consisting of $Eu^{2+}$ and $Ce^{3+}$ optionally in combination with at least one member selected from the group of La, Y, Sc and lanthanide elements other than $Eu^{2+}$ and $Ce^{3+}$ or one or more alkali elements selected from the group consisting of Na and K, and n is in the range $10^{-4} \leq n \leq 5\times10^{-2}$, and wherein said co-dopant(s) when being present is (are) used in an amount not higher than defined by said maximum value of n.

11. A radiation image storage panel according to claim 9 or 10, wherein the phosphor is present on a support sheet at a coverage in the range from 300 to 1500 g/m2.

FIG. 1

FIG. 2

EP 0 503 163 A1

FIG. 3

EP 0 503 163 A1

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 022 564 (FUJI PHOTO)<br>* claims 1-4 *<br>--- | 1,3 | C09K11/86<br>G21K4/00 |
| A | EP-A-0 290 289 (GEC)<br>* claims 1-36 *<br>----- | 3-5 | |
| | | | **TECHNICAL FIELDS SEARCHED (Int. Cl.5)**<br><br>C09K<br>G21K |

The present search report has been drawn up for all claims

| Place of search | Date of completion of the search | Examiner |
|---|---|---|
| THE HAGUE | 08 NOVEMBER 1991 | DROUOT M.C. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)